# EUROPEAN PATENT APPLICATION

(11) **EP 1 806 313 A1**
(43) Date of publication of application: **11.07.2007**
(21) Application number: 05800307.0
(22) Date of filing: 28.10.2005
(51) Int. Cl.: B66F 9/24, B60L 15/20, B66F 9/22, H02K 21/16

(54) **BATTERY FORKLIFT TRUCK**

(30) Priority: 29.10.2004 JP 2004316841
(71) Applicant: Mitsubishi Heavy Industries, Ltd., Minato-ku Tokyo 108-8215 (JP)
(72) Inventor: ISOBE, Shinichi, C/O NAGOYA R&D Center, Nakamura-ku, Nagoya-shi, Aichi 453-8515 (JP); SAKURAI, Takao, C/O NAGOYA R&D Center, Nakamura-ku, Nagoya-shi, Aichi 453-8515 (JP); ENOMOTO, K., C/O Gen. Mach. & Special Vehicle Hq., Sagamihara-shi, Kanagawa 229-1193 (JP); SHIRASU, T., C/O Gen. Mach. & Special Vehicle Hq., Sagamihara-shi, Kanagawa 229-1193 (JP); MORIMOTO, Masayuki, C/O NAGOYA R&D Center, Takasago-shi, Hyogo 676-8686 (JP)
(74) Representative: Henkel, Feiler & Hänzel
(86) International application number: PCT/JP2005/020245
(87) International publication number: WO 2006/046777

(57) **Abstract**

A battery forklift truck using a permanent magnet type synchronous motor, wherein the permanent magnet type synchronous motor for load handling is installed separately from a traveling motor driving wheels. The maximum rotational speed of the motor for load handling is set lower than that of the traveling motor to eliminate the need of field weakening control in a high rotational speed range so that the efficiency of the motor in load handling can be increased.

## Description

### Technical field

The present invention relates to a battery forklift truck in which a permanent magnet type motor is used for load handling, the permanent magnet type motor comprising a stator having coils inserted in a plurality of slots in the stator and a rotor having a plurality of permanent magnets arranged on the outer periphery of the rotor along the circumferential direction in a state they are embedded therein.

### Background art

In recent years, energy-saving, low-emission battery forklift trucks are more prevalent than engine-driven forklift trucks.

DC motors, induction motors, and permanent magnet type synchronous motors as disclosed in Japanese Laid-Open Patent Application No.2002-165428 are adopted for driving battery forklift trucks. However, DC motors are not good in maintainability and low in efficiency resulting in earlier battery drain and induction motors are low in efficiency resulting in earlier battery drain. Therefore, as driving machines of battery forklift trucks are widely used permanent magnet type synchronous motors that are more efficient, lesser in battery drain, and better in maintainability than DC motors and induction motors.

One of prior arts of applying a permanent magnet type synchronous motor as a driving machine for a battery forklift truck is disclosed in Japanese Laid-Open Patent Application No.2003-192299.

According to the art, the forklift truck is composed such that; load handling device for moving up and down the fork and tilting the mast, travel device for moving the forklift truck, and steering device for controlling direction of travel of the forklift truck are driven by the permanent magnet type synchronous motor, and when any one of the devices generate energy, the energy is recovered by the permanent magnet type synchronous motor.

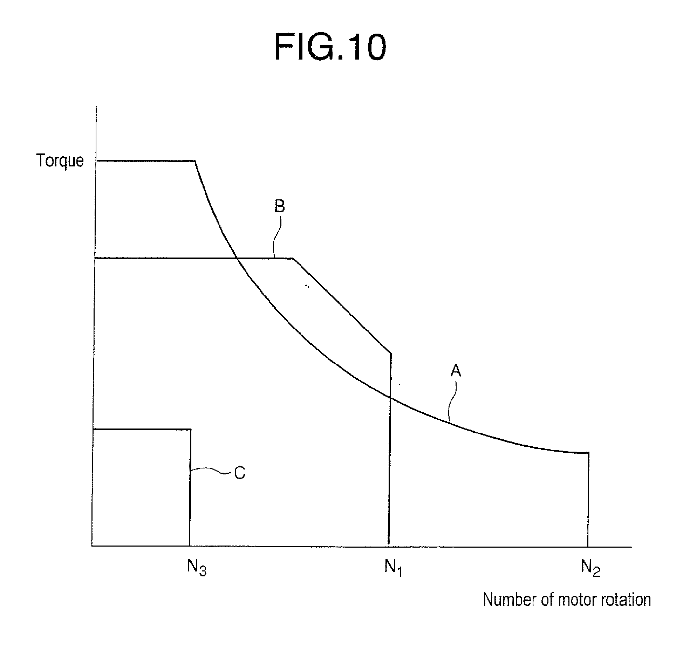

In FIG.10 is shown a graph of N-T characteristics(relation between the number of rotations and output torque) of the motor of the battery forklift truck. In the drawing, A is a N-T characteristic when the forklift truck travels, B is a N-T characteristic when the truck performs load handling such as moving up or down the fork or tilting the mast, and C is a N-T characteristic when steering the truck. As shown in FIG.10, generally in a motor of a battery forklift truck, maximum number of rotations N2 is about 5000rpm when traveling, maximum number of rotations N1 is about 3000rpm when performing load handling, maximum number of rotations N3 is about 500rpm when steering.

However, a plurality of permanent magnets are arranged on the periphery of the rotor along the circumferential direction in the permanent magnet type synchronous motor, so back electromotive force higher than input voltage to the motor is generated in a high speed range. The back electromotive force increases as the rotation speed increases.

In the case the permanent magnet type synchronous motor is used in a battery forklift truck, magnetic field weakening control is performed by passing an electric current which does not contribute to motor torque but weaken the magnetic flux of the magnets in order to suppress the generation of back electromotive force when maximum rotation speed N2 of the motor becomes high as far as 5000rpm during traveling of the forklift truck.

However, when performing the field weakening control in high rotation speed range of the motor, since a current is passed which does not contribute to motor torque, copper loss increases resulting in decreased efficiency of the motor.

Therefore, in the case traveling operation, load handling operation, and steering operation are effected by single permanent magnet type synchronous motor as are in the forklift truck of said Japanese Laid-Open Patent Application No.2002-165428, it is necessary to perform field weakening control to suppress the generation of back electromotive force when the motor is rotating at such a high rotation speed range as between maximum rotation speed of 3000rpm when load handling and maximum rotation speed of 5000rpm when traveling. As a result, efficiency of the motor decreases in the range of high rotation speed caused by field weakening control in the high rotation speed range of the motor.

### Disclosure of the Invention

The present invention was made in light of the problems mentioned above, and the object of the invention is to provide a battery forklift truck installed with a permanent magnet type synchronous motor, in which the necessity of field weakening control of the permanent magnet type synchronous motor is eliminated and motor efficiency when performing load handling and steering is increased.

To attain the object, the present invention proposes a battery forklift truck equipped with a permanent magnet type motor comprising a stator with coils inserted in a plurality of slots formed therein and a rotor with a plurality of permanent magnets embedded in the periphery thereof, wherein the permanent magnet type motor is installed separately from a motor-for-traveling which drives wheels of the forklift truck, and the permanent magnet type motor is used as a motor-for handling load which drives an oil hydraulic pump for supplying working oil to hydraulic cylinders for load handling operation, and wherein maximum rotation speed of the load-handling motor is set to be lower than maximum rotation speed of the traveling motor.

In the invention, the load-handling motor of permanent magnet type is used both for driving the oil hydraulic pump and a power steering device.

According to the invention, a permanent magnet type motor is provided as a load-handling motor which is used in a speed range with maximum speed of about 3000rpm separately from a traveling motor which is used in a higher speed range with maximum speed of about 5000rpm, so that the permanent magnet type synchronous motor used as the load-handling motor is not needed to be operated in such a high speed range between above 3000rpm that is maximum speed when performing load handling and 5000rpm that is maximum speed when traveling.

Therefore, field weakening control for suppressing back electromotive force is unnecessary and decrease in motor efficiency resulting from field weakening control can be avoided, as a result power consumption of the battery can be reduced.

Further, maximum rotation speed of a motor for power steering is about 500rpm and N-T characteristic C needed for power steering is included in the range of N-T characteristic B of the load-handling motor, so the load-handling motor of permanent magnet type can be used also for power steering without problems.

Further, the present invention is characterized in that the load-handling motor is of either 8 or 10 poles.

In the invention, it is preferable that the load-handling motor is constructed such that the number of the slots is 12 when the number of poles is 8 and the number of the slots is 15 when the number of poles is 10.

When the number of poles is 6 or lesser in a permanent magnet type synchronous motor, magnetic saturation occurs due to concentration of magnetic flux, as a result torque coefficient decreases, amounts of current increase, copper loss increases, and motor efficiency decrease. Whereas, when the number of poles is 8 or larger as is in the present invention, magnetic flux is dispersed and amounts of magnetic flux passing through the stator per pole decreases, so occurrence of magnetic saturation as mentioned above is avoided and reduction in motor efficiency can be prevented.

On the other hand, when the number of poles is 12 or larger, the number of slots increases to 18 or larger resulting in decreased width of the tooth part of the stator, which causes increase in flux density, increase in iron loss, and decrease in motor efficiency. Whereas when the number of poles is 10 or lesser as is in the present invention, the number of slots can be 15 or lesser, increase in flux density can be avoided and decrease in motor efficiency can be prevented.

Therefore, by composing the permanent magnet type synchronous motor applied to the load-handling motor such that the number of poles is either 8 or 10 and the number of slots is determined to match the number of poles, that is, 12 slots for 8 poles motor and 15 slots for 10 poles motor, high motor efficiency can be maintained.

In the invention, it is preferable that either flat plate-shaped or circularly arced plate-shaped permanent magnets or both of them are used for the permanent magnets of the load-handling motor of permanent magnet type, and the plate-shaped magnets are disposed at a certain interval along circumferential direction of the rotor such that the outside surface of each magnet plate comes close to the outer circumferential surface of the rotor.

With this construction, as flat plate-shaped or arcularly arced plate-shaped permanent magnets are disposed such that the outside surface of each magnet plate comes close to the outer circumferential surface of the rotor and a magnetic material part (iron part) is not formed between each of the permanent magnets and the outer circumferential surface of the rotor, magnetic material part is smaller compared to a construction in which flat plate-shaped or arcularly arced plate-shaped permanent magnets are embedded in the rotor and magnetic material part is formed between each of the permanent magnets and the outer circumferential surface of the rotor, so that reluctant torque becomes a little smaller but magnet torque due to the permanent magnets becomes larger. As a result, torque of the load-handling motor composed to be a permanent magnet type synchronous motor can be increased.

Further, in the invention, by composing the load-handling motor such that the coils inserted in a plurality of the slots are wound in concentrated winding, the coil end can be reduced in size and the motor can be small sized.

According to the present invention, a permanent magnet type motor is provided as a load-handling motor which is used in a speed range with maximum speed separately from a traveling motor which is used in a higher speed range with maximum speed, so that the permanent magnet type synchronous motor used as the load-handling motor is not needed to be operated in such a high speed range between the maximum speed when performing load handling and the maximum speed when traveling, field weakening control for suppressing back electromotive force is unnecessary, and decrease in motor efficiency resulting from field weakening control can be avoided, as a result power consumption of the battery can be reduced.

Furthermore, according to the invention, as the load-handling motor is composed to be of either 8 poles or 10 poles, occurrence of magnetic saturation can be avoided by the largeness of the number of poles of 8 or larger because magnetic flux per pole passing through the stator is decreased, and increase of magnetic flux density can be avoided by limiting the number of poles to 10 or lesser because the width of the tooth part of the stator is reduced. As a result, by determining the number poles to be 8 or 10, high motor efficiency can be obtained.

### Brief Description of the Drawings

FIG.1 1 is a schematic sectional view perpendicular to the rotation axis of the permanent magnet type synchronous motor of a first embodiment for the battery forklift truck of the present invention, showing the construction of the rotor and stator.
FIG.2 is a view as in FIG.1 of a second embodiment of the present invention.
FIG.3 is a view as in FIG.1 of a third embodiment of the present invention.
FIG.4 is a view as in FIG. 1 of a fourth embodiment of the present invention.
FIG.5(A) is a side view of a forklift truck to which the present invention is applied and FIG.5(B) is a plan view thereof.
FIG. 6 is a block diagram showing the load handling operation system configuration of the battery forklift truck to which the present invention is applied.
FIG.7(A) and 7(B) are schematic diagrams showing magnetic flux in each of the embodiments.
FIG.8(A)-FIG.8(C) show performance simulation results of the motors of the first to fourth embodiments, FIG. 8A) shows configurations of the permanent magnets and slots in the stator, FIG.8(B) motor efficiency, and FIG.8(C) electric current for the same output.
FIG.9(A) and 9(B) are graphs showing relation between arrangement of the permanent magnets and output torque.
FIG.10 is a graph showing N-T characteristics of each of the embodiments.
FIG.11(A)-FIG.11(C) are drawings for explaining magnetization of the permanent magnets in each of the embodiments, FIG.11(A) is a table comparing the number of times of magnetization, FIG.11(B) is an illustration for explaining magnetization method in the case of 10 poles, and FIG.11(C) is an illustration for explaining magnetization method in the case of 8 poles.

### Best mode for embodiment of the Invention

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

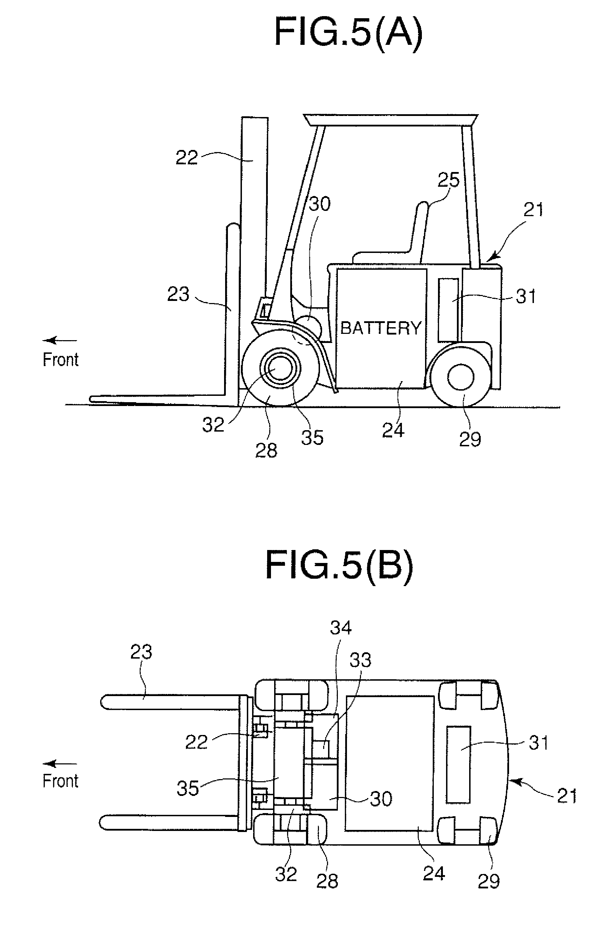

FIG.5(A) is a side view of a forklift truck to which the present invention is applied and FIG.5(B) is a plan view thereof.

Referring to FIG.5(A) and FIG.5(B), reference numeral 21 is a vehicle body of a forklift truck to which the present invention is applied, 22 is a mast provided at the front part of the vehicle body 21, 23 is a fork which is moved up and down along the mast with a load put on the fork, 25 is a driver seat, 28 are front wheels, and 29 are rear wheels.

Reference numeral 32 is a front axle provided with a front wheel drive gear, 35 is a traveling motor connected to the drive gear of the front axle 32, 33 is an oil hydraulic pump which is a power source for load handling, 34 is an oil tank, 30 is a load-handling motor which drives the oil hydraulic pump 33, 24 is a battery for supplying electric power to the traveling motor 35 and the load-handling motor 30, and 31 is a controller for controlling the operation of the traveling motor 35 and the load-handling motor 30.

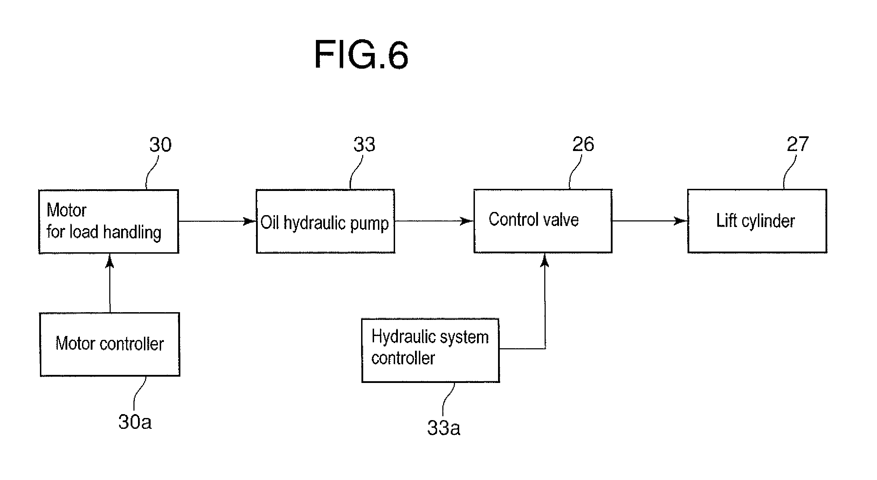

FIG.6 is a block diagram showing the load handling operation system configuration of the battery forklift truck.

When the battery forklift truck shown in FIG.5(A) performs load handling, the load-handling motor 30 which is a permanent magnet type synchronous motor(hereafter referred to as IPM motor) is driven according to a control signal from the motor controller 30a. Torque of the load-handling motor 30 is transmitted to the oil hydraulic pump 33 to drive the pump.

In FIG.6, reference numeral 26 is a control valve for switching between tilting of the mast 22 and lifting of the fork. By switching the control valve 26 from tilting to lifting, operating oil from the oil hydraulic pump 33 is switched to be sent to an oil hydraulic cylinder 27 for lifting to move up or down the fork 23. Speed of lifting the fork 23 by the lift cylinder 27 is controlled by a hydraulic system controller 33a.

The present invention relates to an improvement of the load-handling motor of the battery fork lift truck constructed as described above.

### [First embodiment]

FTG.1 is a schematic sectional view perpendicular to the rotation axis of the permanent magnet type synchronous motor of a first embodiment for the battery forklift truck of the present invention, showing the construction of the rotor and stator.

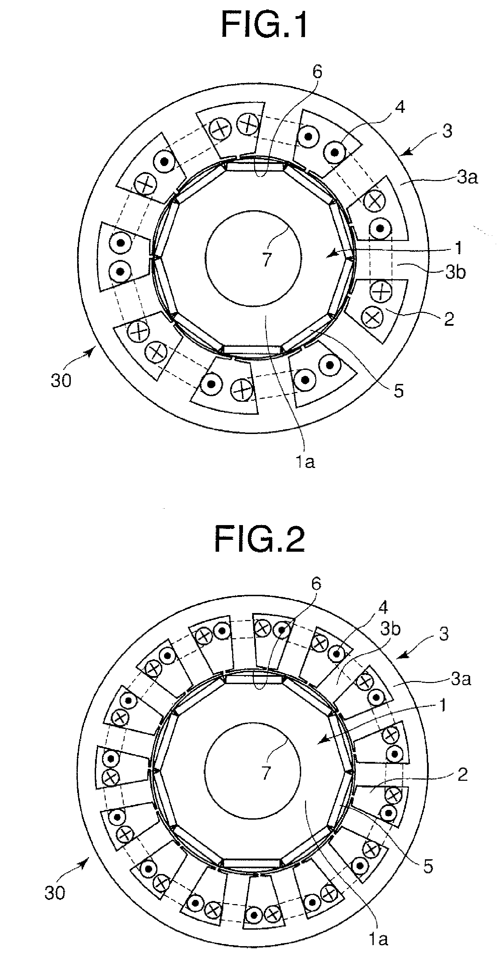

In FIG. 1, reference numeral 1 is a rotor, 1a is an iron core of the rotor 1, 7 is a bore provided in the iron core into which a rotation shaft(not shown in the drawing) for driving the oil hydraulic pump 33 being fitted to be connected to the iron core.

Reference numerals 5 are a plurality of permanent magnets embedded in the rotor, each of the magnets 5 being a flat plate.

These magnet plates are arranged on the outer periphery of the rotor such that they are disposed at a certain interval along circumferential direction of the rotor 1 so that the outside surface of each magnet plate comes close to the outer circumferential surface 6 of the rotor 1. It is also suitable that the permanent magnets are plates of circular arc arranged along the outer circumference of the rotor 1.

Reference numeral 3 is a stator, 3a is a magnet frame part of the stator 3, 3b are a plurality of tooth parts of the stator 3, the tooth parts 3b being arranged along circumferential direction and projecting radially inwardly(toward the rotor 1), thus the iron core of the stator being composed of the outer circumferential part 3a and a plurality of tooth parts 3b.

Reference numerals 2 are slots formed between each of the tooth parts 3b, the number of the slots 2 being the same as that of the tooth parts 3b. Coils 4 are inserted in each of the slots 2 in a state of concentrated winding. By adopting concentrated winding like this, the coil end can be reduced in size and the motor can be small sized.

In the permanent magnet type load-handling motor 30, rotating magnetic fields are generated by passing an electric current through the coils 4, torque is produced by magnetic attraction between the permanent magnets 5 on the rotor 1 and the stator 3, and the rotor 1 is rotated.

In the first embodiment, the number of the permanent magnets 5 embedded in the rotor 1 is 10, i.e. the number of poles is 10, and the number of the slots 2 is 9 (i.e. the number of the tooth parts 3b of the stator is 9).

### [Second embodiment]

FIG.2 is a view as in fIG.1 of a second embodiment of the present invention.

In the second embodiment, the number of the permanent magnets 5 embedded in the rotor is 10, i.e. the number of poles is 10 as is in the first embodiment, and the number of slots 2 is 15(i.e. the number of the tooth parts 3b of the stator is 15).

Construction other than that is identical to the first embodiment, and constituent parts same as those of the first embodiment are denoted by the same reference numerals respectively.

### [Third embodiment]

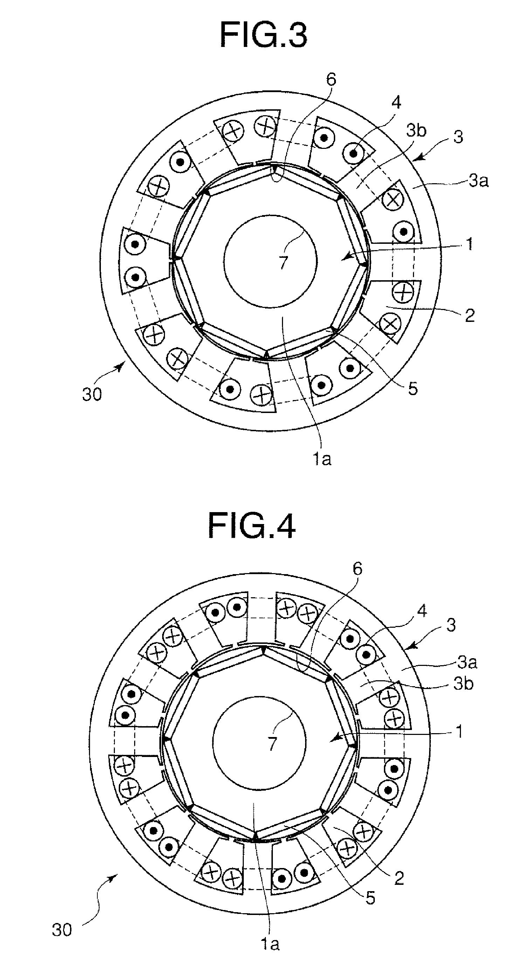

FIG.3 is a view as in FIG.1 of a third embodiment of the present invention.

In the third embodiment, the number of the permanent magnets 5 embedded in the rotor is 8, i.e. the number of poles is 8, and the number of slots 2 is 9(i.e. the number of the tooth parts 3b of the stator is 9).

Construction other than that is identical to the first embodiment, and constituent parts same as those of the first embodiment are denoted by the same reference numerals respectively.

### [Fourth embodiment]

FIG.4 is a view as in FIG.1 of a fourth embodiment of the present invention.

In the fourth embodiment, the number of the permanent magnets 5 embedded in the rotor is 8, i.e. the number of poles is 8 as is in the third embodiment, and the number of slots 2 is 12(i.e. the number of the tooth parts 3b of the stator is 12).

Construction other than that is identical to the first embodiment, and constituent parts same as those of the first embodiment are denoted by the same reference numerals respectively.

Next, operation of the permanent magnet type motor of the first-fourth embodiments when they are applied to the battery forklift truck shown in FIG.5(A) and FIG.6 will be explained hereunder.

FIG.10 is a graph showing N-T characteristics which shows relation between the number of rotations and output torque of the motor in the battery forklift truck shown in FIG.5(A) and FIG.6(including N-T relation of the traveling motor 35 and that of the load-handling motor 30).

In the N-T characteristic, A is a relation between the number of rotations and the driving torque of the motor to drive the travel device when the forklift truck is traveling, B is a relation between the number of rotations and driving torque of the motor to drive the oil hydraulic pump for load handling when performing load handling, and C is a relation between the number of rotations and driving torque of the motor when power- steering. In the drawing, maximum rotation speed N2 when traveling is about 5000rpm, maximum rotation speed N1 when performing load handling is about 3000rpm, and maximum rotation speed N3 when power-steering is about 500rpm.

In the invention, the load-handling motor 30 which is used in a middle-low speed range with maximum speed of about 3000rpm is installed separately from the traveling motor 35 which is used frequently in a high speed range with maximum speed of about 5000rpm, and a permanent magnet type synchronous motor constructed as described in the first to fourth embodiments is adopted for the load-handling motor 30.

In the permanent magnet type synchronous motors, a plurality of permanent magnets are arranged along circumferential direction of the rotor 1, so back electromotive force higher than input voltage to the motor is generated in a high rotation speed range. The back electromotive force increases with increase of rotation speed of the motor. In the case the permanent magnet type synchronous motor is used in a battery forklift truck, magnetic field weakening control is performed by passing an electric current which does not contribute to motor torque but weaken the magnetic flux of the magnets in order to suppress the generation of back electromotive force when rotation speed of the motor is high.

In the permanent magnet type synchronous motors installed on the battery forklift truck, as a current not contributing to motor torque when carrying out field weakening control in a high speed range, there occurs an increase in copper loss, decrease in motor efficiency, and increase in power consumption in the battery.

According to the embodiments, a permanent magnet type motor is provided as the load-handling motor 30 which is used in a speed range with maximum speed of about 3000rpm separately from the traveling motor 35 which is used in a higher speed range with maximum speed of about 5000rpm, so that the permanent magnet type synchronous motor used as the load-handling motor 30 is not needed to be operated in such a high speed range between above 3000rpm that is maximum speed when performing load handling and 5000rpm that is maximum speed when traveling.

Therefore, field weakening control for suppressing back electromotive force is unnecessary and decrease in motor efficiency resulting from field weakening control can be avoided, as a result power consumption of the battery 24 can be reduced.

Further, in the invention, the load-handling motor 30 of permanent magnet type is used also for power steering.

Maximum rotation speed of a motor for power-steering is about 500rpm and N-T characteristic C needed for power steering is included in the range of N-T characteristic B of the load-handling motor 30, so the load-handling motor 30 of permanent magnet type can be used also for power steering without problems.

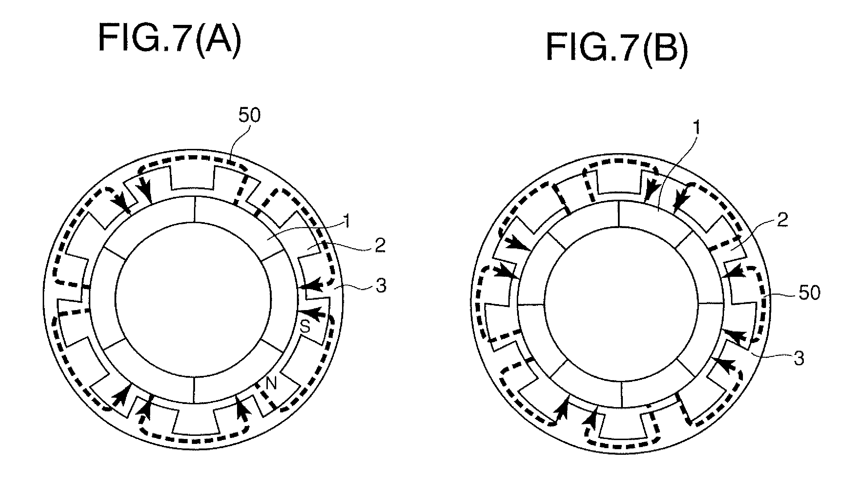

Next, FIG.7(A) shows magnetic flux 50 in the case the motor 30 of permanent magnet type has 6 permanent magnets 5, i.e. the motor is of 6-pole, and FIG.7(B) shows those in the case of 8 poles.

When the permanent magnet type synchronous motor is of 6- pole or lesser, degree of concentration of magnetic flux 50 per pole increases and magnetic saturation occurs in the stator 3 resulting in decrease in torque coefficient(torque per unit electric current), which induces reduction of motor efficiency due to increase of electric current and accordingly increase of copper loss. In the case the number of poles is 8 as is in FTG.7(B) or larger, the magnetic flux 50 flowing from each pole to the stator 3 side decreases.

As the number of poles is 8 at the minimum in the first to fourth embodiments, magnetic flux flowing to the stator 3 side per pole is reduced and occurrence of magnetic saturation in the stator 3 is suppressed, so reduction in motor efficiency caused by decreased torque coefficient due to the magnetic saturation can be prevented.

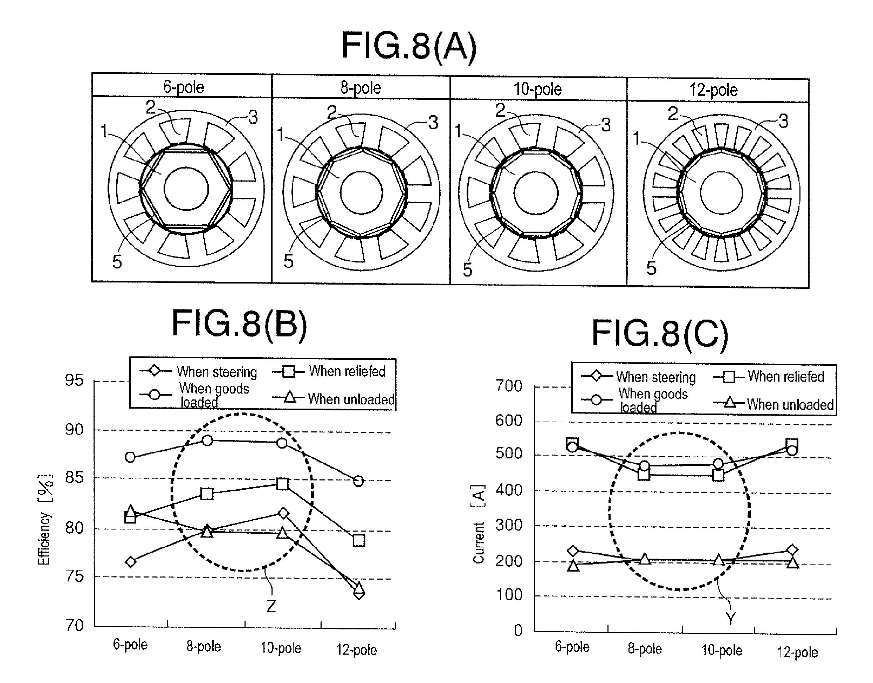

FIG.8(A)-FTG.8(C) show performance simulation results of the motors of the first to fourth embodiments, FIG.8A) shows configurations of the permanent magnets and slots in the stator, FIG.8(B) motor efficiency, and FIG.8(C) electric current for the same output.

In the case the number of poles is 8 or 10 as is in the first-fourth embodiments, motor efficiency is higher than that in the case the number of poles is 6 or 12 as shown in Z zone in FIG.8(B) and electric current for the same output decreases compared to the case the number of poles is 6 or 12 as shown in Y zone in FIG.8(C), thus the effect mentioned above was proven.

On the other hand, when the number of poles is 12 or larger, the number of slots 2 must be increased to 18 or larger, and the width of the tooth part 3b of the stator 3 for forming the slots 2 decreases, as a result magnetic flux density increases, accordingly iron loss increases resulting in decreases motor efficiency.

According to the first to fourth embodiments, maximum number of poles is 10, the number of slots 2 is 15 or less, to be more specific, the number of slots 2 is 12 when the number of poles is 8 and the number of slots 2 is 15 when the number of poles is 10, so sufficient width of the tooth part 3b of the stator 3 can be secured for avoiding increase of magnetic flux density, and reduction in motor efficiency caused by increase of iron loss due to increase in magnetic flux density can be prevented.

As mentioned above, by composing the permanent magnet type synchronous motor applied to the load-handling motor 30 such that the number of poles is either 8 or 10 and the number of slots is determined to match the number of poles, that is, 12 slots for 8 poles motor and 15 slots for 10 poles motor, high motor efficiency can be maintained.

FTG.9(A) and 9(B) are graphs showing relation between arrangement of the permanent magnets and output torque, in which A shows magnet torque, and B reluctance torque.

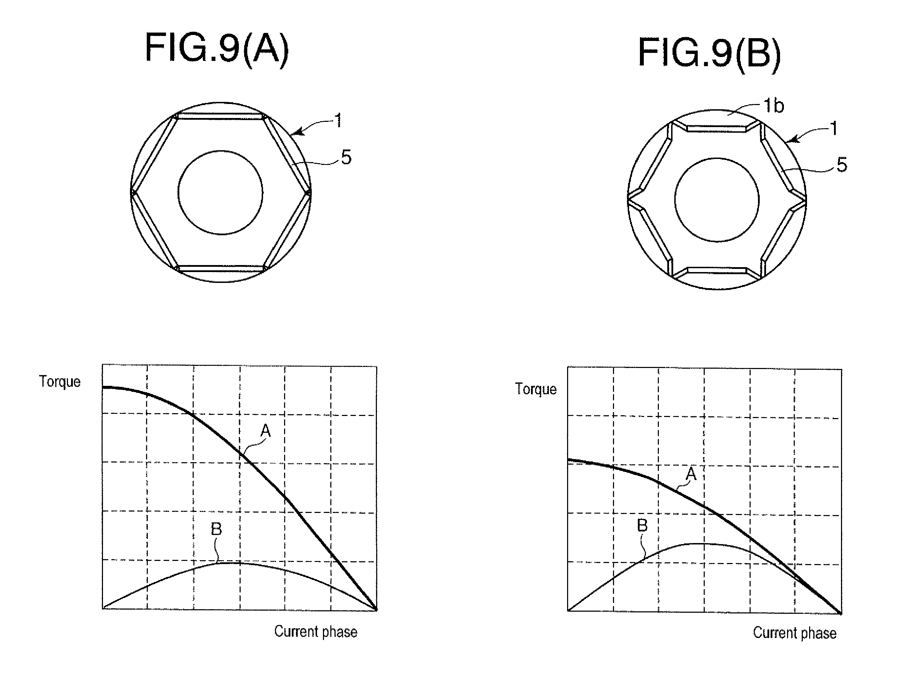

FIG.9(A) shows a configuration according to the present invention. The permanent magnet 5 embedded in the rotor 1 is a flat plate(or plate of circular arc) in the first to fourth embodiments. A plurality of the magnet plates are disposed at a certain interval along circumferential direction of the rotor 1 such that the outside surface of each magnet plate comes close to the outer circumferential surface 6 of the rotor 1 and a magnetic material part(iron part) 1b is not formed between each of the permanent magnets 5 and the outer circumferential surface 6 of the rotor 1.

FIG.9(B) shows a case where permanent magnets 5 are embedded in the rotor 1 and magnetic material part(iron part)1b is formed between the permanent magnet 5 and the outer circumferential surface 6.

In the case of the configuration according to the present invention shown in FIG.9(A), reluctance torque B is a little smaller compared to the case of embedded permanent magnet type of FIG.9(B) because the magnetic material part 1b is smaller than that in the case of FIG.9(B), but magnet torque A due to the permanent magnets 5 is larger compared to the case of FIG.9(B) because of increase in surface area of the permanent magnet 5. Since the increase in magnet torque A is larger than the decrease in reluctance torque B, torque of the load-handling motor 30 of permanent magnet type of the invention shown in FIG.9(B) is larger than that of FIG.9(C).

As mentioned above, by composing the permanent magnet type synchronous motor applied to the load-handling motor 30 such that the number of poles is either 8 or 10 and the number of slots is determined to match the number of poles, that is 12 slots for 8 poles motor and 15 slots for 10 poles motor, high motor efficiency can be maintained.

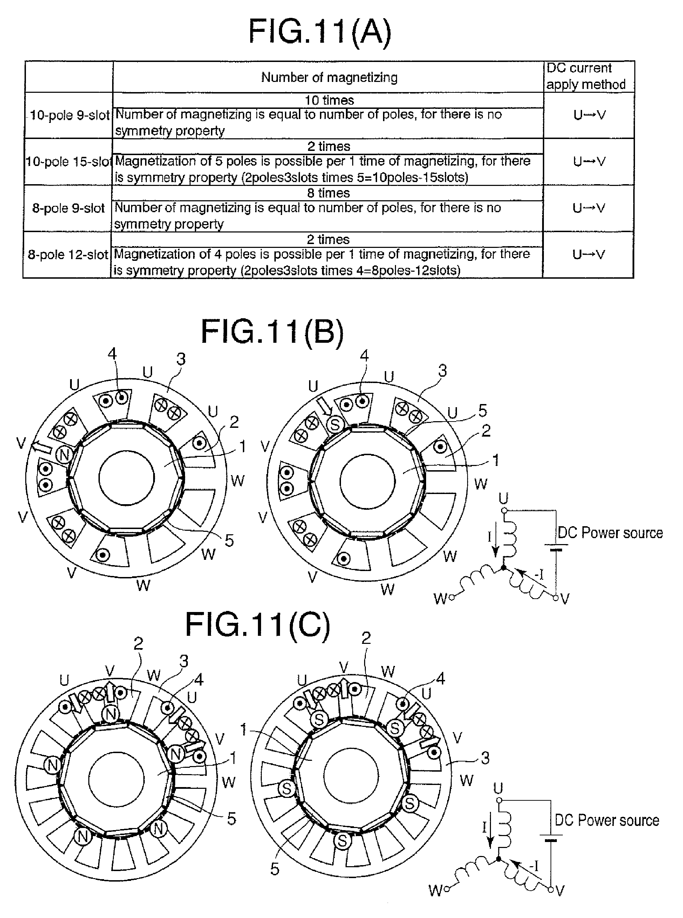

FIG.11(A)-FIG.11(C) are drawings for explaining magnetization of the permanent magnets in each of the embodiments, FIG.11(A) is a table comparing the number of times of magnetization, FIG.11(B) is an illustration for explaining magnetization method in the case of 10 poles, and FIG.11(C) is an illustration for explaining magnetization method in the case of 8 poles.

When magnetizing the permanent magnet 5, DC voltage is applied to the stator 3 and a large amount of current is passed in a moment. The magnets 5 embedded in the rotor 1 are magnetized by magnetic field lines generated by the large amount of current from the stator 3. It is necessary when magnetizing in this way that the location of the magnet 5 in the rotor 1 is matched with that of the magnetic pole in the stator 3.

When magnetizing the permanent magnets 5, in the case of FIG.11(B) where the number of poles is 10 and the number of slots 2 is 9, there is no symmetry property between the number of poles and that of slots, so five times of magnetization are necessary to magnetize N-poles(see the left-hand drawing), and five times of magnetization are necessary to magnetize S-poles(see the right-hand drawing), thus a total of ten times of magnetization are necessary.

In the case of FIG.11(C) where the number of poles is 10 and the number of slots 2 is 15, there is symmetry property between the number of poles and that of slots such that 5 times of a couple of 2 poles-3 slots is 10 poles-15 slots, so the number of magnetization necessary is one time for magnetizing N-poles (see the left-hand drawing) and one time for magnetizing S-poles(see the right-hand drawing), thus the magnetization can be finished by a total of two times of magnetization.

Similarly, in the case of 8 poles and 9 slots (diagrammatic representation is omitted), five times for N-poles and five times for S-poles, a total of ten times of magnetization are necessary, for there is no symmetry property between the number of poles and that of slots. In the case of 8 poled and 12 slots, one time for N-poles and one time for S-poles, and the magnetization can be finished by a total of two times of magnetization, for there is symmetry property between the number of poles and that of slots such that 4 times of a couple of 2 poles-3 slots is 10 poles-15 slots.

Therefore, in the first to fourth embodiments, by composing the permanent magnet type synchronous motor such that the number of slots is 12 when the number of poles is 8 and the number of slots is 15 when the number of poles is 10, magnetization of the permanent magnets can be finished by a total of two times of magnetization, resulting in reduced man-hours for magnetization of the permanent magnets 5 embedded in the rotor.

### Industrial applicability

According to the present invention, a battery forklift truck installed with a permanent magnet type synchronous motor can be provided, in which the necessity of field weakening control of the permanent magnet type synchronous motor is eliminated and motor efficiency when performing load handling and steering is increased.

## Claims

1. A battery forklift truck equipped with a permanent magnet type motor comprising a stator with coils inserted in a plurality of slots formed therein and a rotor with a plurality of permanent magnets embedded in the periphery thereof, wherein said permanent magnet type motor is installed separately from a traveling motor which drives wheels of the forklift truck, and said permanent magnet type motor is used as a motor for handling load which drives an oil hydraulic pump for supplying working oil to hydraulic cylinders for load handling operation, and wherein maximum rotation speed of said load-handling motor is set to be lower than maximum rotation speed of said traveling motor.

2. A battery forklift truck according to claim 1, wherein said load-handling motor of permanent magnet type is used both for driving said oil hydraulic pump and a power steering device.

3. A battery forklift truck according to claim 1 or 2, wherein said load-handling motor is of either 8 or 10 poles.

4. A battery forklift truck according to claim 3, wherein said load-handling motor is constructed such that the number of the slots is 12 when the number of poles is 8 and the number of the slots is 15 when the number of poles is 10.

5. A battery forklift truck according to claim 1 or 2, wherein either flat plate-shaped or circularly arced plate-shaped magnets or both of them are used for the permanent magnets of said load-handling motor of permanent magnet type, and said plate-shaped magnets are disposed at a certain interval along circumferential direction of the rotor such that the outside surface of each magnet plate comes close to the outer circumferential surface of the rotor.

6. A battery forklift truck according to claim 1 or 2, wherein said load-handling motor is constructed such that said coils inserted in a plurality of said slots are wound in concentrated winding.
